(19) Europäisches Patentamt

European Patent Office

Office européen des brevets

(11) **EP 0 687 656 B1**

(12) **EUROPÄISCHE PATENTSCHRIFT**

(45) Veröffentlichungstag und Bekanntmachung des Hinweises auf die Patenterteilung:
**01.03.2000 Patentblatt 2000/09**

(51) Int Cl.[7]: **C04B 35/01**, H01C 7/04

(21) Anmeldenummer: **95109030.7**

(22) Anmeldetag: **12.06.1995**

(54) **Sinterkeramik für hochstabile Thermistoren und Verfahren zu ihrer Herstellung**

Sintered ceramic for highly stable thermistors and process for their manufacture

Céramique frittée pour thermisteurs hautement stables et procédé de fabrication

(84) Benannte Vertragsstaaten:
**DE FR GB NL**

(30) Priorität: **14.06.1994 DE 4420657**

(43) Veröffentlichungstag der Anmeldung:
**20.12.1995 Patentblatt 1995/51**

(73) Patentinhaber: **SIEMENS MATSUSHITA COMPONENTS GmbH & CO. KG**
**81617 München (DE)**

(72) Erfinder:
• **Feltz, Adalbert, Prof. Dr.**
**A-8530 Deutschlandsberg (AT)**
• **Rosc, Friedrich-Franz, Dipl.-Ing.**
**A-8530 Deutschlandsberg (AT)**

(74) Vertreter: **Epping, Wilhelm, Dr.-Ing. et al**
**Patentanwalt**
**Postfach 22 13 17**
**80503 München (DE)**

(56) Entgegenhaltungen:
**EP-A- 0 609 776**

• **Z. ANORG. ALLG. CHEM., Bd.619, Nr.01, Januar 1993 Seiten 39 - 46 A. FELTZ 'STRUKTUR UND EIGENSCHAFTEN STABILER SPINELLE IN DEN REIHEN MxNiMn(2-x)O4'**
• **DATABASE WPI Week 8906, Derwent Publications Ltd., London, GB; AN 89-043176 & JP-A-63 315 549 (MATSUSHITA ELECTRIC. IND. KK) 23. Dezember 1988**
• **DATABASE WPI Week 8203, Derwent Publications Ltd., London, GB; AN 82-05123E & JP-A-56 160 007 (MATSUSHITA ELECTRIC. IND. KK) 9. Dezember 1981**

**Beschreibung**

Die Erfindung betrifft eine Sinterkeramik für hochstabile Thermistoren nach dem Oberbegriff des Patentanspruchs 1 sowie ein Verfahren zu ihrer Herstellung nach Patentanspruch 8 bzw. 9.

Keramikmaterialien der gattungsgemäßen Art haben auch als dünne Schichten in Strahlungsempfängern Bedeutung erlangt.

Beispielsweise aus der GB-PS 1 226 789 bekannte technische Lösungen gehen von halbleitenden Oxiden der Übergangselemente und deren Kombinationen z.B. in Spinellen aus. Dabei gelangen vielfach Mehrphasensysteme, z.B. Kobalt-Mangan-Oxid-Systeme zur Anwendung, die durch weitere Komponenten wie Kupferoxid, Nickeloxid oder Lithiumoxid (siehe z.B. US-PS 3,219,480) modifiziert werden, ohne daß der Vorteil der Bildung einer einheitlichen Phase angestrebt wird. Der Nennwiderstand $R_{25}$ (elektrischer Widerstand des Thermistors bei T = 25°C) und die für die Empfindlichkeit der Temperaturmessung maßgebliche B-Konstante gemäß der Beziehung

$$R(T) = R_0 exp(B/T) = R_{25} exp(1/T - 1/298)$$

wird auf der Basis derartiger mehrphasiger Systeme durch eine entsprechende Reaktionsführung im Sinterprozeß auf variable Werte eingestellt, so daß bei einem gegebenen Versatz die Produktion eines bestimmten Sortiments von Thermistoren möglich ist. Diese Verfahrensweise schließt im allgemeinen eine beträchtliche Streubreite der Daten der Einzelexemplare und insbesondere von Charge zu Charge ein, da die den Thermistor kennzeichnenden elektrischen Parameter je nach dem erreichten Strukturgefüge der Keramik verschiedene Werte annehmen. In derartigen heterogenen Systemen ist die Gleichge-wichtszusammensetzung der Phasen im allgemeinen temperaturabhängig, woraus sich negative Wirkungen auf die zeitliche Stabilität der elektrischen Parameter ergeben.

Aus der Siemens-Zeitschrift 47, Januar 1973, Heft 1, Seiten 65 bis 67 ist es bekannt geworden, daß Thermistoren z.B. auf der Basis des Systems $Ni_x Mn_{3-x} O_4$ gefertigt werden. Für den Bereich der Zusammensetzung 0 < x < 1.275 ergibt sich eine weitgehend einheit-liche Phase, die die genannten Nachteile einer großen Streubreite nicht mehr aufweist, vorausgesetzt, daß ein Keramikgefüge erreicht wird, was mit der Verwendung eines speziellen Sinterhilfsmittels verknüpft ist. Bei der Führung des Sinterprozesses zur Thermistorfertigung muß bei diesen Oxidhalbleitern mit einheitlichem Phasenbestand beim Unterschreiten der Temperatur von 720°C an der Luft ein Zerfall in ein heterogenes Gemisch vermieden werden. Dadurch ist der Anwendungsbereich auf etwa 150°C begrenzt.

In Spinellverbindungen des Systems $Ni_x Mn_{3-x} O_4$, in denen entsprechend der allgemeinen Formel

$$Mg_z NiMn_{2-z} O_4$$

eine schrittweise Substitution von Mangan durch Magnesium vorgenommen wurde, konnte mit zunehmendem Magnesiumgehalt eine Absenkung der Temperatur, bei der die oxidative Zersetzung beginnt, nachgewiesen und für die Zusammensetzung $MgNiMnO_4$ (z = 1) vollständige Stabilität erreicht werden. Dies ist in WO 9322255A beschrieben.

Von Nachteil ist, daß die Temperatur der Sauerstoffabspaltung unter einer $O_2$-Atmosphäre im Bereich hoher Temperatur, die mit der Ausscheidung einer NiO-Phase verbunden ist, von 975°C für $NiMn_2 O_4$ auf 680°C für $MgNiMnO_4$ herabgemindert wird. Um eine hinreichende Sinterverdichtung zu erreichen, muß die Prozeßführung daher die obere Stabilitätsgrenze überschreiten und ein heterogenes Stadium durchlaufen, d.h. erst durch eine in der Regel zeitaufwendige Rückoxidation bei Temperaturen < 700°C wird unter Vereinigung der Phasen eine homogene Keramik erhalten. Die Nachteile konnten durch den Einbau von $Fe^{III}$ in das System $Ni_x Mn_{3-x} O_4$ in Reihen

$$Fe_{1-y} Ni_x Mn_{2-x+y} O_4$$

beseitigt werden, indem durch den Einbau von Eisen ein für die Leitfähigkeit erforderliches Äquivalent an Mangan(III) und zugleich an Mangan(IV) auf den B-Plätzen des Spinellgitters erzeugt und dabei für den kubischen Spinell $FeNiMnO_4$ mit einer aus Mößbauermessungen abgeleiteten Kationenverteilung

$$Fe^{III}_{0,66} Mn^{II}_{0,34} [Ni^{II} Fe^{III}_{0,34} Mn^{III}_{0,32} Mn^{IV}_{0,34}] O_4$$

eine obere Zersetzungstemperatur $T_Z$ = 1020°C an Luft erreicht wird. Es wurde festgestellt, daß sich eine Halbleiterkeramik dieser Zusammensetzung durch eine bemerkenswert hohe Alterungsstabilität auszeichnet. Dies ist in EP 0609776 A1 beschrieben worden.

Der Erfindung liegt die Aufgabe zugrunde, den Variationsbereich der B-Konstante und der spezifischen elektrischen Leitfähigkeit einer Sinterkeramik für Thermistoren mit hoher thermischer Stabilität und Empfindlichkeit bei zugleich hoher Alterungsstabilität zu erweitern, um eine Anpassung an vorgegebene Kennlinien zu ermöglichen und ein Verfahren zum Herstellen einer solchen Sinterkeramik anzugeben, bei dem der Übergang in ein heterogenes System im Prozeß der Sinterführung vermieden und dabei auf ein Sinterhilfsmittel verzichtet werden kann, wodurch eine stabile NTC-Keramik gewährleistet wird.

Zur Lösung dieser Aufgabe ist die Sinterkeramik der eingangs angegebenen Art erfindungsgemäß durch das Merkmal des Patentanspruches 1 gekennzeichnet.

Bevorzugte Ausführungsformen sind in entsprechenden Unteransprüchen gekennzeichnet.

Ein Verfahren zum Herstellen einer Sinterkeramik der in Rede stehenden Art ist erfindungsgemäß durch die Merkmale der Patentansprüche 8 oder 9 gekennzeichnet.

Der Kern der Erfindung ist darin zu sehen, durch Variation der Anteile Nickel, Mangan, Eisen und Kupfer in den Reihen

$$Cu_z Fe_{1-y} Ni_x Mn_{2-x+y} O_4$$

mit

$$-0,1 \leq y \leq 0,15$$

$$1 > x > 0,5$$

und

$$0 < z \leq 1,5$$

Spinelle hoher Alterungsstabilität mit für NTC-Anwendungen günstigen Leitfähigkeits-parametern zu erhalten.

Die hohe Alterungsstabilität kann erfindungsgemäß durch eine Voralterung über den Temperaturbereich von Raumtemperatur bis 150°C hinaus bis auf 250°C bzw. 280°C ausgedehnt werden.

z = 0,03; y = 0,01; x = 0,862, 0,755 oder 0,627
z = 0,007; y = 0,002; x = 0,869 oder 0,761
z = 0,015; y = 0,005; x = 0867 oder 0,759
z = 0,03; y = 0,03; x = 0,70 oder 0,633
z = 0,06; y = 0,02; x = 0,633 oder y = 0,06; x = 0,633
z = 0,15; y = 0,05; x = 0,60 oder y = 0,15; x = 0,633

Erfindungsgemäße Herstellungsverfahren werden an folgenden Beispielen näher erläutert:

Gemäß einer ersten Ausführungsform wird ein Gemenge der Ausgangsstoffe $MnO_x$, NiO, $Fe_2O_3$ und CuO in eine stabile Keramik einer Eisen-Nickel-Manganoxid-Spinellphase hoher thermischer Stabilität und Alterungsstabilität überführt.

Gemäß einer zweiten Ausführungsform werden Gemenge der entsprechenden Zusammensetzung, bestehend aus $\alpha$-$Fe_2O_3$($\alpha$-Eisen-(III)-Oxid), Mangancarbonat, Nickelcarbonat und CuO mit jeweils bekanntem Gehalt an Metallkationen bei einer Temperatur von über 600°C, vorzugsweise 650°C kalziniert. Nach granulometrischer Aufbereitung erfolgt eine Formgebung durch Pressen sowie Sintern an Luft bei Temperaturen von 1050°C bis 1200°C, deren genauer Wert möglichst auf die je nach Zusammensetzung etwas verschiedene Zersetzungstemperatur einzustellen ist, und eine sich anschließende Temperung bei 800°C bis 900°C ergeben ein optimales Keramikgefüge mit einer relativen Dichte von 85 bis 90 %, das den an Thermistoren hoher Reproduzierbarkeit und Stabilität gesetzten Anforderungen entspricht. Dem kalzinierten Gemisch kann dabei vor und auch nach der granulometrischen Aufbereitung ein Sinterhilfsmittel in Form von Bleigermanat oder Wismutoxid zugesetzt werden.

In der Tabelle sind Beispiele der erfindungsgemäßen Sinterkeramik hoher Alterungsstabilität bei zugleich hoher Einheitlichkeit und Phasenstabilität zur Anwendung in Thermistoren hoher Stabilität und Empfindlichkeit angegeben.

Tabelle :

| | | | | Zusammensetzung und elektrische Eigenschaften, Temperatur $T_Z$ der einsetzenden $O_2$-Abspaltung und NiO-Ausscheidung sowie relative **Dichte D** der Spinellkeramik $Cu_zFe_{1-y}Ni_xMn_{2-x-z+y}O_4$ | | | | |
|---|---|---|---|---|---|---|---|---|
| Proben-Nr | z | y | x | Zusammensetzung | D/% | $T_Z$/°C | $\rho$ (25°C)/ $\Omega$cm | B/K |
| 1 | 0.007 | 0.002 | 0.869 | $Cu_{0.007}Fe_{0.998}Ni_{0.869}Mn_{1.126}O_4$ | 92 | | 4160 | 3410 |
| 2 | 0.015 | 0.005 | 0.867 | $Cu_{0.015}Fe_{0.995}Ni_{0.867}Mn_{1.123}O_4$ | 91 | | 3710 | 3370 |
| 3 | 0.03 | 0.01 | 0.862 | $Cu_{0.03}Fe_{0.99}Ni_{0.862}Mn_{1.118}O_4$ | 90 | | 9420 | 3650 |
| 4 | 0.007 | 0.007 | 0.871 | $Cu_{0.007}Fe_{0.993}Ni_{0.871}Mn_{1.129}O_4$ | 90 | | 4500 | 3410 |
| 5 | 0.007 | 0.002 | 0.761 | $Cu_{0.007}Fe_{0.998}Ni_{0.761}Mn_{1.234}O_4$ | 90 | | 8960 | 3630 |
| 6 | 0.015 | 0.005 | 0.759 | $Cu_{0.015}Fe_{0.995}Ni_{0.759}Mn_{1.230}O_4$ | 90 | | 7410 | 3590 |
| 7 | 0.03 | 0.010 | 0.755 | $Cu_{0.03}Fe_{0.99}Ni_{0.755}Mn_{1.225}O_4$ | 93 | | 5670 | 3530 |
| 8 | 0.030 | 0.01 | 0.693 | $Cu_{0.03}Fe_{0.99}Ni_{0.693}Mn_{1.287}O_4$ | 90 | | 12690 | 3700 |
| 9 | 0.03 | 0.03 | 0.700 | $Cu_{0.03}Fe_{0.97}Ni_{0.700}Mn_{1.300}O_4$ | 92 | | 10270 | 3660 |
| 10 | 0.03 | 0.01 | 0.627 | $Cu_{0.03}Fe_{0.99}Ni_{0.627}Mn_{1.353}O_4$ | 92 | | 26730 | 3925 |
| 11 | 0.03 | 0.03 | 0.633 | $Cu_{0.03}Fe_{0.97}Ni_{0.633}Mn_{1.367}O_4$ | 92 | | 22690 | 3880 |
| 12 | 0.06 | 0.02 | 0.620 | $Cu_{0.06}Fe_{0.98}Ni_{0.620}Mn_{1.340}O_4$ | - | | 9740 | 3660 |
| 13 | 0.06 | 0.06 | 0.633 | $Cu_{0.06}Fe_{0.94}Ni_{0.633}Mn_{1.367}O_4$ | - | | 15600 | 3765 |
| 14 | 0.15 | 0.05 | 0.60 | $Cu_{0.15}Fe_{0.95}Ni_{0.600}Mn_{1.300}O_4$ | - | | 1600 | 3220 |
| 15 | 0.15 | 0.15 | 0.633 | $Cu_{0.15}Fe_{0.85}Ni_{0.633}Mn_{1.367}O_4$ | - | | 589 | 3020 |

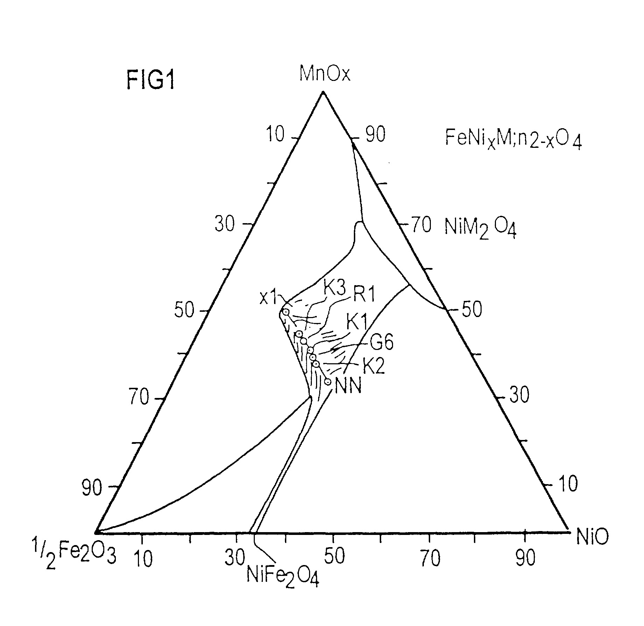

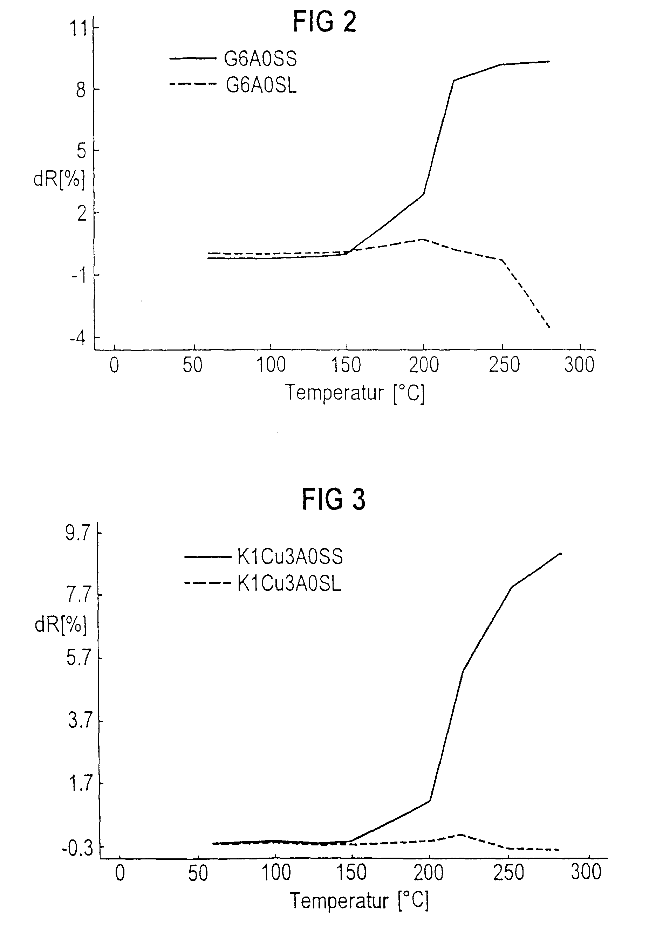

**Patentansprüche**

1. Sinterkeramik für hochstabile Thermistoren auf der Basis

$$Ni_xMn_{3-x}O_4$$

mit x > 0,
**gekennzeichnet durch** die allgemeine Formel

$$Cu_zFe_{1-y}Ni_xMn_{2-x-z+y}O_4$$

mit 0 < z ≤ 1,5 und y = -0,1 bis 0,15, sowie 1 > x > 0,5.

2. Sinterkeramik nach Anspruch 1, **dadurch gekennzeichnet**, daß für z = 0,03 und y = 0,01 x = 0,862, 0,755, 0,693 bzw. 0,627 oder ist.

3. Sinterkeramik nach Anspruch 1, **dadurch gekennzeichnet**, daß für z = 0,007 und Y = 0,002 x = 0,869 oder 0,761 ist.

4. Sinterkeramik nach Anspruch 1, **dadurch gekennzeichnet**, daß für z = 0,015 und y = 0,005 x = 0,867 oder 0,759 ist.

5. Sinterkeramik nach Anspruch 1, **gekennzeichnet durch** das Wertetripel z = 0,03; y = 0,03; x = 0,70 oder 0,633.

6. Sinterkeramik nach Anspruch 1, **gekennzeichnet durch** das Wertetripel z = 0,06; y = 0,02; x = 0,633 oder y = 0,06; x = 0,633.

**7.** Sinterkeramik nach Anspruch 1, **gekennzeichnet durch** das Wertetripel z = 0,15; y = 0,05; x = 0,60 oder y = 0,15; x = 0,633.

**8.** Verfahren zur Herstellung einer Sinterkeramik für hochstabile Thermistoren nach einem der Ansprüche 1 bis 7, **dadurch gekennzeichnet**, daß ein Gemenge der Ausgangsstoffe $MnO_x$, NiO, $Fe_2O_3$ und CuO in eine stabile Keramik einer Eisen-Kupfer-Nickel-Manganoxid-Spinellphase hoher thermischer Stabilität und Alterungsstabilität überführt wird.

**9.** Verfahren zur Herstellung einer Sinterkeramik für hochstabile Thermistoren nach einem der Ansprüche 1 bis 7, **dadurch gekennzeichnet**, daß ein Gemenge aus Nickelcarbonat, Mangancarbonat, $\alpha$-Eisen-(III)-Oxid und CuO durch Erhitzen auf über 600°C an Luft kalziniert wird, und daß aus diesem Kalzinat nach granulometrischer Aufbereitung und Preßformgebung durch Sintern an Luft bzw. in Sauerstoffatmosphäre Sinterkeramikkörper erzeugt werden.

**10.** Verfahren nach Anspruch 9, **dadurch gekennzeichnet**, daß dem Kalzinat vor und nach der granulometrischen Aufbereitung ein Sinterhilfsmittel zugesetzt wird, wonach die Formgebung zu Tabletten erfolgt, vorzugsweise durch einen Preßvorgang, und daß diese Tabletten bei Temperaturen von 1020 bis 1200°C in Luftatmosphäre unter Bildung einer einheitlichen Spinellphase gesintert werden.

**11.** Verfahren nach Anspruch 10, **dadurch gekennzeichnet**, daß als Sinterhilfsmittel Bleigermanat oder Wismutoxid verwendet wird.

**12.** Verfahren nach Anspruch 9 oder 10, **dadurch gekennzeichnet**, daß nach der Sinterung eine Termperung bei einer Temperatur von 800°C bis 900°C durchgeführt wird.

## Claims

**1.** Sintered ceramic for highly stable thermistors based on $Ni_xMn_{3-x}O_4$
where x > 0
characterized by the general formula

$$Cu_zFe_{1-y}Ni_xMn_{2-x-z+y}O_4$$

where $0 < z \leq 1.5$ and y = 0.1 to 0.15, and 1 > x > 0.5.

**2.** Sintered ceramic according to Claim 1, characterized in that, for z = 0.03 and y = 0.01, x = 0.862, 0.755, 0.693 and/or 0.627.

**3.** Sintered ceramic according to Claim 1, characterized in that, for z = 0.007 and Y = 0.002, x = 0.869 or 0.761.

**4.** Sintered ceramic according to Claim 1, characterized in that, for z = 0.015 and y = 0.005, x = 0.867 or 0.759.

**5.** Sintered ceramic according to Claim 1, characterized by the value triple z = 0.03; y = 0.03; x = 0.70 or 0.633.

**6.** Sintered ceramic according to Claim 1, characterized by the value triple z = 0.06; y = 0.02; x = 0.633 or y = 0.06; x = 0.633.

**7.** Sintered ceramic according to Claim 1, characterized by the value triple z = 0.15; y = 0.05; x = 0.60 or y = 0.15; x = 0.633.

**8.** Method for producing a sintered ceramic for highly stable thermistors according to one of Claims 1 to 7, characterized in that a mixture of the starting materials $MnO_x$, NiO, $Fe_2O_3$ and CuO is added to a stable ceramic in an iron-copper-nickel-manganese oxide-spinel phase of high thermal stability and ageing stability.

**9.** Method for producing a sintered ceramic for highly stable thermistors according to one of Claims 1 to 7, characterized in that a mixture of nickel carbonate, manganese carbonate, $\alpha$-iron (III) oxide and CuO is calcinated by heating to more than 600°C in air, and in that sintered ceramic bodies are produced from this calcinate after granulometric processing and pressing, by sintering in air or in an oxygen atmosphere.

**10.** Method according to Claim 9, characterized in that a sintering aid is added to the calcinate before and after the granulometric processing, after which the calcinate is formed into tablets, preferably by a pressing process, and in that these tablets are sintered at temperatures of 1020 to 1200°C in an air atmosphere, forming a common spinel phase.

**11.** Method according to Claim 10, characterized in that lead germanate or bismuth oxide is used as the sintering aid.

**12.** Method according to Claim 9 or 10, characterized in that heat treatment is carried out at a temperature of 800°C to 900°C after sintering.


**Revendications**

**1.** Céramique frittée pour des thermistances très stables à base de $Ni_xMn_{3-x}O_4$ avec x > 0, caractérisée par la formule générale

$$Cu_zFe_{1-y}Ni_xMn_{2-x+y}O_4$$

Avec 0 < z 1,5 et y = -0,1 à 0,15, ainsi que 1 > x > 0,5.

**2.** Céramique frittée suivant la revendication 1, caractérisée en ce que pour z = 0,03 et = 0,01 x = 0,862, 0,755, 0,693 ou 0,627

**3.** Céramique frittée suivant la revendication 1, caractérisée en ce que pour z = 0,007 et y = 0,002 x = 0,869 ou 0,761

**4.** Céramique frittée suivant la revendication 1, caractérisée en ce que pour z = 0,015 et y = 0,005 x = 0,867 ou 0,759

**5.** Céramique frittée suivant la revendication 1, caractérisée par le triplet de valeurs z = 0,03 ; y = 0,03 ; x = 0,70 ou 0,633

**6.** Céramique frittée suivant la revendication 1, caractérisée par le triplet de valeurs z = 0,06 ; y = 0,02 ; x = 0,633 ou y = 0,06 ; x = 0,633

**7.** Céramique frittée suivant la revendication 1, caractérisée par le triplet de valeurs z = 0,15 ; y = 0,05 ; x = 0,60 ou y = 0,15 ; x = 0,633

**8.** Procédé de fabrication d'une céramique frittée pour des thermistances très stables suivant l'une des revendications 1 à 7, caractérisé en ce qu'il consiste à transformer un mélange de matières premières $MnO_x$, NiO, $Fe_2O_3$ et CuO en une céramique stable d'une phase spinelle fer-cuivre-nickel-oxyde de manganèse de grande stabilité thermique et ayant une grande stabilité au vieillissement.

**9.** Procédé de fabrication d'une céramique frittée pour des thermistances très stables suivant l'une des revendications 1 à 7, caractérisé en ce qu'il consiste à calciner par chauffage au-delà de 600°C dans l'air un mélange de carbonate de nickel, de carbonate de manganèse, d'oxyde de fer(III)-$\alpha$ et de CuO et de produire, à partir de ce produit calciné après traitement granulométrique et façonnage par compression par frittage dans l'air ou dans une atmosphère d'oxygène, des corps céramiques frittés.

**10.** Procédé suivant la revendication 9,

caractérisé en ce qu'il consiste à ajouter au produit calciné avant et après le traitement granulométrique un adjuvant de frittage, le façonnage en comprimés s'effectuant de préférence par une opération de compression et à fritter ces comprimés à des températures de 1020 à 1200°C dans une atmosphère d'air avec formation d'une phase spinelle uniforme.

11. Procédé suivant la revendication 10,
   caractérisé en ce qu'il consiste à utiliser comme adjuvant de frittage du germanate de plomb ou de l'oxyde de bismuth.

12. Procédé suivant la revendication 9 ou 10,
   caractérisé en ce qu'il consiste à effectuer après le frittage un recuit à une température de 800°C à 900°C.

FIG1

MnOx

$FeNi_xM;n_{2-x}O_4$

10    90

30

70    $NiM_2O_4$

50

x1    K3 R1

K1

G6

K2

NN

50

70

30

90

10

$\frac{1}{2}Fe_2O_3$    10    30    50    70    90    NiO

$NiFe_2O_4$

## FIG 2

## FIG 3